# EUROPÄISCHE PATENTANMELDUNG

(11) **EP 3 404 139 A1**
(43) Veröffentlichungstag der Anmeldung: **21.11.2018**
(21) Anmeldenummer: 17171751.5
(22) Anmeldetag: 18.05.2017
(51) Int. Cl.: D06H 5/00, B29C 65/08, D03D 3/04, A24C 5/00

(54) **VERFAHREN ZUM ULTRASCHALLSCHWEISSEN EINES BANDS**

(71) Anmelder: Max Schlatterer GmbH & Co. KG, 89542 Herbrechtingen (DE)
(72) Erfinder: RENNER, Stefan, 89584 Ehingen (DE); STROBEL, Manfred, 89537 Giengen-Sachsenhausen (DE); WAGNER, Andreas, 89564 Nattheim (DE)
(74) Vertreter: Schmid, Wolfgang

(57) **Zusammenfassung**

Bei einem Verfahren zum Ultraschallschweißen eines aus einem Kunststoffmaterial bestehenden Bands (1) für die Herstellung von Zigarettenprodukten, bei dem das Band (1) zwei freie Enden (5,6) aufweist, werden die in einem Verbindungsbereich (8) mittels Ultraschall erwärmt und miteinander zu einem geschlossenen Band (1) verbunden. Es wird Ultraschall mit einer Frequenz von mehr als 22 kHz verwendet.

## Beschreibung

Die Erfindung betrifft ein Verfahren zum Ultraschallschweißen eines aus einem Kunststoffmaterial bestehenden Bands für die Herstellung von Zigarettenprodukten nach der im Oberbegriff von Anspruch 1 näher definierten Art. Des Weiteren betrifft die Erfindung ein Band für die Herstellung von Zigarettenprodukten, mit einem aus einem Kunststoffmaterial bestehenden Kettfäden und Schussfäden aufweisenden Gewebe gemäß dem Oberbegriff von Anspruch 7.

Aus dem allgemeinen Stand der Technik ist ein derartiges Verfahren sowie ein solches Band bekannt. Das Ultraschallschweißen wird eingesetzt, um ein zuvor zwei freie Enden aufweisendes Band zu einem endlosen Band zu verbinden.

Dieses Verfahren hat sich zwar über die Jahre bewährt, es erfordert jedoch einen relativ großen Zeitaufwand. Ein weiterer Nachteil des Ultraschallschweißens besteht darin, dass im Verbindungsbereich die Schussfäden entfernt werden müssen, da ansonsten keine ausreichende Verbindung zwischen den beiden freien Enden entsteht.

Aus diesem Grund wurde in jüngster Zeit zum Verbinden der beiden freien Enden eines derartigen Bands vermehrt das Laserstrahlschweißen, wie es beispielsweise in der DE 10 2011 006 803 A1 beschrieben ist, eingesetzt.

Allerdings hat auch das Laserstrahlschweißen gewisse Nachteile, nämlich unter anderem das Erfordernis des Einsatzes eines lichtabsorbierenden Materials, das entweder zuvor in die das Gewebe bildenden Fäden oder in eine Folie eingebracht werden muss, die während des Schweißens auf den Verbindungsbereich der beiden freien Enden aufgelegt wird.

Es ist daher Aufgabe der vorliegenden Erfindung, ein Verfahren zum Ultraschallschweißen eines aus einem Kunststoffmaterial bestehenden Bands für die Herstellung von Zigarettenprodukten sowie ein Band für die Herstellung von Zigarettenprodukten zu schaffen, mit denen die Nachteile der bisher eingesetzten Verfahren des Ultraschallschweißens und des Laserstrahlschweißens überwunden werden können.

Erfindungsgemäß wird diese Aufgabe durch die in Anspruch 1 genannten Merkmale gelöst.

Durch den erfindungsgemäßen Einsatz einer Frequenz des Ultraschalls von mehr als 22 kHz wird mehr Leistung in den Verbindungsbereich eingebracht, was zu einem schnelleren und/oder stärkeren Aufschmelzen der das Gewebe bildenden Kett- und/oder Schussfäden führt. Dadurch lässt sich eine bessere Verbindung der beiden freien Enden zu dem endlosen Band erreichen.

Das erfindungsgemäße Verfahren kann gegebenenfalls dazu führen, dass auch im Verbindungsbereich Schussfäden vorhanden sein können, da diese im Gegensatz zu der bisherigen Vorgehensweise die Festigkeit der Verbindung nicht reduzieren.

Ein weiterer Vorteil des Einsatzes einer derart hohen Ultraschallfrequenz besteht darin, dass die zur Erzeugung des Ultraschalls erforderliche Einrichtung, beispielsweise eine Sonotrode, sehr viel kleiner als bislang ausgeführt werden kann. Dadurch lässt sich eine solche Ultraschallerzeugungseinrichtung einfacher als bislang in die gesamte Anordnung zur Herstellung des Bands integrieren, wodurch der gesamte Prozess der Herstellung des Bands automatisiert werden kann.

Ein weiterer Vorteil der erfindungsgemäßen Lösung kann darin bestehen, dass gegebenenfalls auf ansonsten in den Verbindungsbereich eingebrachte Zusatzmaterialien, wie Folien und dergleichen, verzichtet werden kann.

In einer sehr vorteilhaften Weiterbildung der Erfindung kann vorgesehen sein, dass Ultraschall mit einer Frequenz in einem Bereich von 22 bis 100 kHz verwendet wird. Eine solche obere Grenze der Frequenz des zum Verschweißen der beiden freien Enden des Bands verwendeten Ultraschalls hat sich im Hinblick auf die in das Material eingebrachte Leistung als vorteilhaft erwiesen.

In diesem Zusammenhang werden noch größere Vorteile hinsichtlich der Durchführbarkeit des erfindungsgemäßen Verfahrens erreicht, wenn Ultraschall mit einer Frequenz in einem Bereich von 25 bis 60 kHz verwendet wird.

Des Weiteren kann vorgesehen sein, dass Ultraschall mit einer Frequenz in einem Bereich von 30 bis 45 kHz verwendet wird. Dies führt zu weiteren Vorteilen im Hinblick auf die Einbringung von Leistung in das zu verbindende Band.

In der Praxis hat es sich als besonders vorteilhaft erwiesen, wenn Ultraschall mit einer Frequenz in einem Bereich von 32 bis 38 kHz verwendet wird. Mit dieser Frequenz werden besonders gute Ergebnisse bei der Verbindung der beiden freien Enden des Bands in dem Verbindungsbereich erzielt.

Besonders vorteilhaft ist es, wenn Ultraschall mit einer Frequenz in einem Bereich von 34 bis 36 kHz verwendet wird. Eine Frequenz in einem derartigen Bereich führt zu exzellenten Ergebnissen bezüglich des Verschweißens der freien Enden des Bands zu einem endlosen Band für die Herstellung von Zigarettenprodukten. Auch die Einrichtung zur Erzeugung des bei dem Verfahren eingesetzten Ultraschalls lässt sich durch die Verwendung eines solchen Frequenzbereichs sehr kompakt gestalten.

In Anspruch 7 ist ein Band für die Herstellung von Zigarettenprodukten angegeben.

Der besondere Vorteil dieses Bands, dessen freie Enden in dem Verbindungsbereich mittels Ultraschallschweißen verbunden sind, liegt in der Anwesenheit von Schussfäden in dem gesamten Verbindungsbereich. Dies vereinfacht zum einen die Herstellung des Bands, da die Schussfäden nicht mehr vor dem Ultraschallschweißen entfernt werden müssen. Zum anderen kann dadurch vorteilhafterweise eine höhere Festigkeit des Bands erreicht werden.

Nachfolgend ist ein Ausführungsbeispiel der Erfindung anhand der Zeichnung prinzipmäßig dargestellt.

Es zeigt:
- Fig. 1: ein Band für die Herstellung von Zigarettenprodukten vor der Verbindung der beiden freien Enden desselben; und
- Fig. 2: das Band aus Fig. 1 beim Ultraschallschweißen.

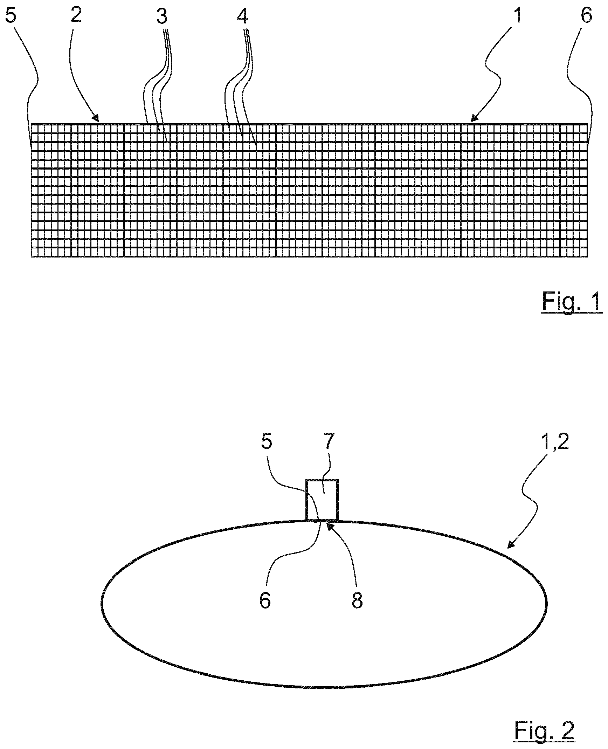

Fig. 1 zeigt ein Band 1 für die Herstellung von nicht dargestellten Zigarettenprodukten, wie beispielsweise Zigaretten, Filtern oder alternativen Zigarettenprodukten, wie beispielsweise sogenannten E-Zigaretten. Bei dem Band 1 kann es sich um ein Formatband zum Herstellen des Zigarettenprodukts oder um ein Saugband zum Transport von Tabak handeln.

Wenn das Band 1 als Formatband ausgebildet ist, kann es zum Beispiel in einer Maschine eingesetzt werden, in der Filter für Zigaretten in Form von endlosen oder zumindest relativ langen Filtersträngen hergestellt werden, die auch als Filtertow bezeichnet werden. Das Formatband könnte auch als Vakuumband zum Transport verschiedener Gegenstände oder Materialien, wie beispielsweise Tabak oder Filtermaterial, eingesetzt werden. Im Falle der Ausführung des Bands 1 als Saugband kann dies beispielsweise zum Transport von Tabakfasern eingesetzt werden. Da sowohl Formatbänder als auch Saugbänder grundsätzlich bekannt sind, wird auf deren konkrete Verwendung hierin jedoch nicht näher eingegangen.

Das Band 1 weist ein Gewebe 2 auf, das in an sich bekannter Weise aus Kettfäden 3 und Schussfäden 4 besteht. Da auch die Herstellung des Gewebes 2 aus den Kettfäden 3 und den Schussfäden 4 an sich bekannt ist, wird hierin ebenfalls nicht näher darauf eingegangen. Zu erwähnen ist lediglich, dass sich an beiden freien Enden 5 und 6 des Bands 1 durchgehend die Schussfäden 4 befinden, d. h. dass diese vor dem nachfolgend beschriebenen Verbinden der beiden freien Enden 5 und 6 des Bands 1 nicht entfernt werden.

Sowohl die Kettfäden 3 als auch die Schussfäden 4 bestehen aus einem Kunststoffmaterial, vorzugsweise aus einem polymeren Werkstoff mit einer kristallinen oder teilkristallinen Struktur. Insbesondere handelt es sich bei dem polymeren Werkstoff um einen Werkstoff aus der Familie der Polyetherketone. Besonders bevorzugt sind die Werkstoffe PEK, PEEK, PEKK, PEEKK. Bei den Kettfäden 3 und den Schussfäden 4 handelt es sich vorzugsweise um monofile Fäden.

In Fig. 2 ist ein Schritt eines Verfahrens zum Ultraschallschweißen der beiden freien Enden 5 und 6 des Bands 1 zu einem endlosen Band dargestellt. Hierbei wird mittels einer Ultraschallerzeugungseinrichtung 7, beispielsweise einer Sonotrode, das Band 1 in einem Verbindungsbereich 8, in dem die beiden freien Enden 5 und 6 aufeinander gelegt werden, mittels Ultraschall erwärmt, wodurch die beiden freien Enden 5 und 6 des Bands 1 miteinander verbunden werden, sodass ein endloses Band 1 entsteht. Das Gewebe 2 des auf diese Weise hergestellten Bands 1 weist in dem gesamten Verbindungsbereich 8 die Schussfäden 4 auf.

Bei der Erwärmung der beiden freien Enden 5 und 6 des Bands 1 wird Ultraschall mit einer Frequenz von mehr als 22 kHz verwendet. Noch bevorzugter wird Ultraschall mit einer Frequenz von 22 bis 100 kHz verwendet. Noch bevorzugter wird Ultraschall mit einer Frequenz in einem Bereich von 25 bis 60 kHz verwendet. Noch bevorzugter wird Ultraschall mit einer Frequenz in einem Bereich von 30 bis 45 kHz verwendet. Noch bevorzugter wird Ultraschall mit einer Frequenz in einem Bereich von 32 bis 38 kHz verwendet. Am bevorzugtesten wird Ultraschall mit einer Frequenz in einem Bereich von 34 bis 36 kHz verwendet.

Die Ultraschallerzeugungseinrichtung 7 bzw. die Sonotrode kann Teil einer gesamten Vorrichtung sein, mit der das Band 1 gegebenenfalls vollautomatisch hergestellt werden kann.

## Patentansprüche

1. Verfahren zum Ultraschallschweißen eines aus einem Kunststoffmaterial bestehenden Bands (1) für die Herstellung von Zigarettenprodukten, wobei das Band (1) zwei freie Enden (5,6) aufweist, die in einem Verbindungsbereich (8) mittels Ultraschall erwärmt und miteinander zu einem geschlossenen Band (1) verbunden werden,
**dadurch gekennzeichnet, dass**
Ultraschall mit einer Frequenz von mehr als 22 kHz verwendet wird.

2. Verfahren nach Anspruch 1,
**dadurch gekennzeichnet, dass**
Ultraschall mit einer Frequenz in einem Bereich von 22 bis 100 kHz verwendet wird.

3. Verfahren nach Anspruch 1 oder 2,
**dadurch gekennzeichnet, dass**
Ultraschall mit einer Frequenz in einem Bereich von 25 bis 60 kHz verwendet wird.

4. Verfahren nach einem der Ansprüche 1, 2 oder 3,
**dadurch gekennzeichnet, dass**
Ultraschall mit einer Frequenz in einem Bereich von 30 bis 45 kHz verwendet wird.

5. Verfahren nach einem der Ansprüche 1 bis 4,
**dadurch gekennzeichnet, dass** Ultraschall mit einer Frequenz in einem Bereich von 32 bis 38 kHz verwendet wird.

6. Verfahren nacheinem der Ansprüche 1 bis 5,
**dadurch gekennzeichnet, dass**
Ultraschall mit einer Frequenz in einem Bereich von 34 bis 36 kHz verwendet wird.

7. Band (1) für die Herstellung von Zigarettenprodukten, mit einem aus einem Kunststoffmaterial bestehenden Kettfäden (3) und Schussfäden (4) aufweisenden Gewebe (2), das in einem Verbindungsbereich (8) mittels Ultraschallschweißen verbunden ist,
**dadurch gekennzeichnet, dass**
das Gewebe (2) in dem gesamten Verbindungsbereich (8) Schussfäden (4) aufweist.
